# EUROPÄISCHE PATENTSCHRIFT

(11) **EP 4 557 161 B1**
(45) Veröffentlichungstag und Bekanntmachung des Hinweises auf die Patenterteilung: **05.11.2025**
(21) Anmeldenummer: 23209972.1
(22) Anmeldetag: 15.11.2023
(51) Int. Cl.: G06K 7/14

(54) **LESEN VON OPTISCHEN CODES**
READING OPTICAL CODES
LECTURE DE CODES OPTIQUES

(43) Veröffentlichungstag der Anmeldung: 21.05.2025
(73) Patentinhaber: SICK AG, 79183 Waldkirch (DE)
(72) Erfinder: Schüler, Pascal, 79331 Teningen (DE); Zopf, Steffen, 79183 Waldkirch (DE)

(56) Entgegenhaltungen:
- EP-A1- 2 003 599
- US-A1- 2010 044 439
- US-A1- 2020 019 743
- US-B2- 8 740 081

## Beschreibung

Die Erfindung betrifft einen optoelektronischen Codeleser und ein Verfahren zum Lesen von optischen Codes nach dem Oberbegriff von Anspruch 1 beziehungsweise 15.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsart werden die codetragenden Objekte an dem Codeleser vorbeigefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmä-ßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Als Vorbereitung für das Lesen von Codes wird in einem aufgenommenen Ausgangsbild eines codetragenden Objekts nach interessierenden Bereichen beziehungsweise Codebildbereichen gesucht, also denjenigen Bereichen im Bild, die potentiell einen Code enthalten können. Dieser Schritt wird als Segmentierung oder Vorsegmentierung bezeichnet. Dem menschlichen Betrachter fällt die Erkennung von Codebildbereichen sehr leicht. Algorithmisch betrachtet ist dies jedoch eine ausgesprochen anspruchsvolle Aufgabe. Denn oftmals weisen Muster oder Strukturen im Hintergrund ähnliche Eigenschaften auf wie die Codebildbereiche selbst. Beispielsweise besitzen 2D-Codes mit sehr kleinen Modulen in vielerlei Hinsicht sehr ähnliche Eigenschaften wie Textbereiche, Logos, Paketbänder und dergleichen.

In einer Codelese-Anwendung steht üblicherweise nur eine begrenzte Decodierzeit zur Verfügung, weil ständig neue Objekte und Codes erfasst werden, die eine Verarbeitung zumindest annähernd in Echtzeit verlangen. Eine gewisse zeitliche Elastizität ist zulässig, aber die zeitliche Lücke darf nie so groß werden, dass Codes übersehen werden. Beispielsweise setzt bei einer Matrixkamera die Zeit zwischen zwei Aufnahmen der Decodierzeit eine obere Grenze. Das gilt zumindest im Mittel, durch einen Verarbeitungspuffer kann einer Aufnahme ausnahmsweise mehr Decodierzeit gewidmet werden, die dann aber nachfolgenden Aufnahmen fehlt. Bei Verwendung einer Zeilenkamera mit sukzessivem Zusammensetzen von Bildausschnitten ist das ganz ähnlich. Wird ein Versatz zwischen den verarbeiteten Bildausschnitten und der aktuell aufgenommenen Zeile zu groß, so entsteht irgendwann eine Lücke, die unter den zumindest annähernden Echtzeitbedingungen nicht mehr aufgeholt werden kann.

Wenn nun die oben angesprochene Segmentierung falsch-positive interessierende Bereiche erkennt, in denen sich tatsächlich gar kein optischer Code befindet, so geht dies zu Lasten der Decodierzeit. Es werden dann womöglich Codes nicht gelesen, weil der Decoder einen zu großen Anteil seiner Decodierzeit mit vergeblichen Leseversuchen falsch-positiver interessierender Bereiche verbringen muss.

Daher ist es wünschenswert, falsch-positive interessierende Bereiche zu vermeiden. Damit ist natürlich nicht gemeint, die Balance zu falsch-negativen interessierenden Bereichen hin zu verschieben, also optische Codes schon von vorneherein bei der Segmentierung zu übersehen. Ein möglicher Ansatz, die Fehlerrate beim Auffinden von interessierenden Bereichen insgesamt zu reduzieren, besteht in einer Verbesserung der Segmentierung. Die EP 4 231 195 A1 beispielsweise nutzt dafür eine Kombination aus klassischer Bildverarbeitung und einem Verfahren des maschinellen Lernens.

In der praktischen Anwendung sind optische Codes zumeist auf Etiketten gedruckt. Sie befinden sich also regelmäßig nicht direkt auf dem Objekt, sondern sind über das Etikett gruppiert. Die Etiketten weisen zudem Regelmäßigkeiten auf. Die meisten Versender oder Logistiker beispielsweise verwenden ein weitgehend festes Layout. Aus einem Etikett ableitbare Informationen werden aber bisher für das Codelesen nicht weiter beachtet.

Die EP 3 534 291 A1 befasst sich mit dem Lesen von Codes im Rahmen der Gepäckabfertigung an Flughäfen, wo es zu einer Mehrfachlesung durch sogenannte Abrisscodes kommen kann, also ältere Codes, die nicht vollständig entfernt wurden. Im Falle einer Mehrfachlesung wird die Geometrie des Codes oder eines Etiketts oder Labels geprüft, auf der sich der Code befindet. Das sind jedoch alles der Segmentierung und Decodierung nachgelagerte Schritte, die nicht zu einer Verminderung von falsch-positiven interessierenden Bereichen oder einer verbesserten Ausnutzung der Decodierzeit beitragen.

In der US 2008/0121688 A1 wird eine zu codierende Information mindestens teilweise überlappend auf zwei Barcodes eines Etiketts verteilt. Damit soll die Information auch dann erfassbar sein, wenn einer der Codes teilweise verdeckt ist. Zu der oben erläuterten Problematik der begrenzten Decodierzeit und möglicher falsch-positiver interessierender Bereiche trägt das nicht bei.

Die EP 3 428 835 A1 und die EP 4 258 160 A1 befassen sich mit Vorwissen über Codes beziehungsweise Code-Schemata, mit deren Hilfe Codes möglicherweise noch gelesen werden können, wenn sie beschädigt sind oder durch sonstige Störungen einen Lesefehler auslösen. Dazu wird ein Teil des Codes aus dem Vorwissen oder dem Code-Schema rekonstruiert oder alternativ zumindest festgestellt, dass ein Leseergebnis nicht korrekt ist. Das alles bezieht sich auf das Decodieren selbst, nicht die Segmentierung, und nutzt keinerlei auf Etiketten bezogene Informationen aus.

Die US 2010/0044439 A1 (D1) offenbart ein Bildverarbeitungsverfahren zum Lesen von Barcodes, bei dem der wahrscheinliche Bildbereich mit dem Barcode lokalisiert wird, um das Decodieren auf diesen Bildbereich zu beschränken. Die Erkenung des wahrscheinlichen Bildbereichs beruht auf dem unterstellten hellen Hintergrund eines Barcodes. Konkret werden einfach die Werte eines binarisierten Bildes aufaddiert, wobei Schwarz durch eine Null und Weiß durch eine Eins repräsentiert ist, so dass helle Zeilen beziehungsweise Spalten an einer hohen Summe erkannt werden können.

Die EP 2 003 599 A1 (D2) beschreibt ein Echtzeit-Binarisierungsverfahren in einem optoelektronischen Sensor zum Erfassung von Codes. Als ein bevorzugter Vorverarbeitungsschritt der eigentlichen Bildverarbeitung werden dann interessierende Bereiche identifiziert. Ein Beispiel für einen interessierenden Bereich ist ein anhand seiner optischen Eigenschaften identifizierbarer Aufkleber.

Es ist daher Aufgabe der Erfindung, das Lesen optischer Codes weiter zu verbessern.

Diese Aufgabe wird durch einen optoelektronischen Codeleser und ein Verfahren zum Lesen von optischen Codes nach Anspruch 1 beziehungsweise 15 gelöst. Mit einem Lichtempfangselement werden Bilddaten von codetragenden Objekten aufgenommen, insbesondere während einer Förderbewegung der Objekte. Das Lichtempfangselement kann ein Bildsensor einer Matrixkamera oder ein Zeilensensor sein, der sukzessive Bildzeilen aufnimmt. Auch ein Codescanner kann zeilenweise Bilddaten erfassen. Eine Steuer- und Auswertungseinheit segmentiert die Bilddaten, findet somit darin interessierende Bereiche (ROI, Region of interest) mit optischen Codes oder Codekandidaten. Ob ein interessierender Bereich tatsächlich einen Code enthält, ist zu diesem Zeitpunkt nicht bekannt, das wird zunächst nur mit den Kriterien der Segmentierung beurteilt, in der es falsch-positive interessierende Bereiche geben kann. In manchen Situationen werden die Bilddaten insgesamt keinen Code enthalten, so dass aus der Segmentierung keine interessierenden Bereiche oder nur falsch-positive interessierende Bereiche resultieren. Die interessierenden Bereiche werden mit einem Decoder oder Decodierverfahren bearbeitet, um den Codeinhalt eines darin enthaltenen optischen Codes auszulesen. Im Falle eines falsch-positiven interessierenden Bereichs wird das Decodierverfahren nur Decodierzeit verbrauchen, ohne zu einem Leseergebnis zu kommen. Ein Decoder wendet vorzugsweise eine Vielzahl von Decodierverfahren an, weshalb das Decodierverfahren im Folgenden wiederholt mit einem unbestimmten Artikel angesprochen ist.

Die Erfindung geht von dem Grundgedanken aus, in den Bilddaten ein Etikett zu erkennen. Auf einem Etikett oder Label befinden sich wie einleitend beschrieben optische Codes und oft auch sonstige Beschriftungen auf einem gemeinsamen Untergrund, wie einem Schildchen, Aufkleber oder einer sonstigen Druckunterlage, die an dem codetragenden Objekt angebracht ist. Es wird versucht, die interessierenden Bereiche einem Etikett zuzuordnen, und damit wird zwischen interessierenden Bereichen, die Teil eines Etiketts sind und solchen unterschieden, die es nicht sind. Dabei wird im Falle mehrerer erkannter Etiketten vorzugsweise differenziert, welchem der Etiketten ein interessierender Bereich zugehört. Die weitere Verarbeitung der interessierenden Bereiche mit dem Decodierverfahren wird dann davon abhängig gemacht, ob der interessierende Bereich zu einem Etikett gehört, und gegebenenfalls zu welchem Etikett. Unterschiede können sich beispielsweise hinsichtlich des Decodierverfahrens, der Reihenfolge der Decodierung, der zugewiesenen Decodierzeit und der wiederholten Leseversuche (Retries) ergeben, wie unten anhand verschiedener Ausführungsformen erläutert.

Die Erfindung hat den Vorteil, dass das Wissen über die Zugehörigkeit zu einem Etikett eine verbesserte Decodierung ermöglicht. Die verfügbare Decodierzeit kann besser genutzt werden, um sich verstärkt echten Codebereichen statt falsch-positiven interessierenden Bereichen zu widmen. Dadurch erhöht sich insgesamt die Leserate. Zudem ergibt sich über die Etiketten eine logische Gruppierung von interessierenden Bereichen, optischen Codes beziehungsweise deren Codeinhalt, die auch ausgabeseitig verfügbar gemacht werden kann. Insbesondere kann die Information ausgegeben werden, zu welchem Etikett ein Leseergebnis gehört, welches Etikett erfasst wurde und/oder ob es vollständig decodiert wurde oder nicht.

Die Steuer- und Auswertungseinheit ist bevorzugt dafür ausgebildet, die interessierenden Bereiche nach Etiketten zu gruppieren. Es wird somit nicht lediglich binär entschieden, ob sich ein interessierender Bereich auf einem Etikett befindet oder nicht. Vielmehr wird eine Gruppierung gefunden, die jeden interessierenden Bereich einem bestimmten Etikett zuordnet. Dabei können eine Art Einzelgänger übrigbleiben, nämlich interessierende Bereiche, die sich keinem Etikett zuordnen lassen.

Die Steuer- und Auswertungseinheit ist bevorzugt dafür ausgebildet, zu den interessierenden Bereichen eine Wertzahl (Scoring, Score-Wert) zu bestimmen, wie verlässlich in dem interessierenden Bereich ein optischer Code erfasst ist, und die Wertzahl in der Reihenfolge der Bearbeitung der interessierenden Bereiche mit einem Decodierverfahren zu berücksichtigen. Die Wertzahl hängt davon ab, wie gut die Segmentierungskriterien erfüllt wurden, und ist somit ein Zusatzergebnis des Segmentierungsverfahrens. Nach dieser Ausführungsform hängt die Reihenfolge des Decodierens, anders als im Stand der Technik, nicht allein von der Wertzahl ab. Vielmehr wird vorteilhafterweise eine Etikettenzugehörigkeit zumindest mitberücksichtigt.

Die Steuer- und Auswertungseinheit ist bevorzugt dafür ausgebildet, interessierenden Bereichen, die Teil eines Etiketts sind, eine höhere Wertzahl zuzuweisen. Das ist eine besonders einfache Art und Weise, die Etikettenzugehörigkeit in die Reihenfolge der Bearbeitung durch den Decoder einfließen zu lassen. Die Wertzahl kann noch weiter erhöht werden, wenn auf demselben Etikett bereits ein Code gelesen wurde beziehungsweise das Etikett genauer identifiziert worden ist. Das sind nämlich deutliche Hinweise darauf, dass der betroffene interessierende Bereich kein falsch-positives Ergebnis der Segmentierung ist, so dass es sich voraussichtlich lohnt, hier weitere Decodierzeit aufzuwenden. Der Zuschlag zu der Wertzahl kann spiegelbildlich als Abschlag für Interessierende Bereiche außerhalb von Etiketten verstanden oder implementiert werden. Damit sind solche Einzelgänger nicht gänzlich von der Decodierung ausgeschlossen, müssen aber schon sehr deutliche Anzeichen eines optischen Codes zeigen, um Decodierzeit zugewiesen zu bekommen.

Die Steuer- und Auswertungseinheit ist bevorzugt dafür ausgebildet, interessierende Bereiche eines Etiketts direkt nacheinander mit einem Decodierverfahren zu bearbeiten, so dass interessierende Bereiche eines Etiketts als Gruppe abgearbeitet werden. Direkt nacheinander oder gemeinsam bedeutet, dass nicht zwischenzeitlich interessierende Bereiche decodiert werden, die nicht zu dem aktuell bearbeiteten Etikett gehören. Die Reihenfolge des Decoders weicht damit deutlich von dem herkömmlichen Vorgehen ab, das die Etikettenzugehörigkeit ignoriert. Die logische Zusammengehörigkeit von optischen Codes eines gemeinsamen Etiketts findet sich nach dieser Ausführungsform auch in der gemeinsamen Bearbeitung durch den Decoder wieder. Innerhalb der Gruppe interessierender Bereiche desselben Etiketts kann die Reihenfolge beispielsweise wieder nach Wertzahlen priorisiert sein. Sofern gleichzeitig mehrere Etiketten erkannt sind, kann die Reihenfolge der Etiketten zufällig oder anhand der Wertzahlen von interessierenden Bereichen auf dem Etikett festgelegt werden. Beispielsweise wird mit dem Etikett begonnen, das den interessierenden Bereich mit der höchsten Wertzahl enthält, oder mit der durchschnittlich höchsten Wertzahl, mit den meisten oder wenigsten interessierenden Bereichen und dergleichen.

Die Steuer- und Auswertungseinheit ist bevorzugt dafür ausgebildet, ein Etikett anhand seiner Helligkeit und homogenen Textur zu erkennen. Das sind zwei besonders prägende Merkmale eines Etiketts. Typischerweise werden optische Codes auf Papier oder einen vergleichbaren weißen oder jedenfalls sehr hellen Hintergrund gedruckt. Dementsprechend bedeutet die Suche nach einem Etikett in einem aufgenommenen Bild oder Bildbereich gleichsam die Suche nach einer hellen, einheitlichen Fläche. Selbstverständlich ist die homogene Textur nicht durchgehend zu fordern, da sonst nur leere Etiketten ohne Codes gefunden würden. Vielmehr geht es darum, dass ein relevanter Anteil von beispielsweise 50%, 25% oder auch nur 10% des Etiketts dessen homogenen Hintergrund bildet. Sofern der Codeleser Farben erfassen kann, wird vorzugsweise weiter differenziert und nach einem weißen oder hellgrauen Hintergrund gesucht, da optische Codes in aller Regel nicht auf farbigem Untergrund aufgebracht werden, auch nicht auf einem hellen farbigen Untergrund wie beispielsweise gelb oder hellrosa. Andererseits kann dem Codeleser ausnahmsweise bekannt sein, dass es Etiketten in einer bestimmten Farbe gibt, dann wird diese Farbe zu einem starken Merkmal, das für ein Etikett spricht.

Die Steuer- und Auswertungseinheit ist bevorzugt dafür ausgebildet, ein Etikett mit Hilfe von mindestens einem der folgenden Kriterien zu erkennen: dunkle Strukturen, Form, Größe, enthaltene Codestrukturen, Ausrichtung der Codestrukturen innerhalb des Etiketts. Dunkle Strukturen entsprechen den gesuchten Codes, die vorzugsweise schwarz gedruckt oder aufgebracht werden. Ein Etikett hat meist eine rechteckige Form oder jedenfalls eine wohldefinierte Geometrie, wozu auch weitere geometrische Eigenschaften wie ein Seitenverhältnis (aspect ratio) zählen können. Auch die Größe oder Abmessungen eines Etiketts können Annahmen unterliegen oder bekannt sein. Enthaltene Codestrukturen bedeutet, dass Signaturen von optischen Codes erkannt sind, insbesondere typische Hell-Dunkel-Übergänge in erwarteten Mustern. Schließlich sind Codestrukturen in einem Etikett nicht wahllos schräg vorgesehen, sondern werden geordnet aufgebracht, meistens horizontal oder bisweilen auch vertikal in das Etikett gedruckt. Damit sind fünf weitere mögliche Kriterien für ein Etikett genannt, mit Helligkeit und Homogenität des Vorabsatzes sind es insgesamt sieben Kriterien. Diese sind nicht unbedingt abschließend, aber besonders geeignet. Um nicht alle Kriterien abarbeiten zu müssen, können vorteilhafte Unterkombinationen gebildet werden, beispielsweise Helligkeit, Form und enthaltene Codestrukturen.

Die Steuer- und Auswertungseinheit hat vorzugsweise Zugriff auf mindestens eine Etikett-Schablone, die einen bekannten Etiketten-Typ kennzeichnet, wobei eine Etikett-Schablone eine Anzahl von auf diesem Etiketten-Typ vorhandenen optischen Codes aufweist, insbesondere einschließlich jeweiliger Codeart und/oder Position der optischen Codes innerhalb eines Etiketts. Zugriff bedeutet, dass die Steuer- und Auswertungseinheit einen entsprechenden Speicher beliebiger Bauart umfasst oder auf einen solchen Speicher mindestens mittelbaren Zugriff hat. Bisher wurde lediglich erkannt, dass es sich um ein Etikett handelt. Mit Hilfe von Etikett-Schablonen (Label Templates) können bestimmte Etiketten erkannt und unterschieden werden. Etikett-Schablonen können verschiedene Merkmale umfassen, wobei besonders wichtig die Anzahl der darauf untergebrachten optischen Codes ist, vorzugsweise samt zugehöriger Codeart. Überdies kann Vorwissen über den jeweiligen Code vorgegeben sein, beispielsweise ein wiederkehrender fixer Anteil des Codes oder eine Beschreibung, welche Art Zeichen an zumindest einigen Positionen innerhalb des Codes erwartet werden. Solches Vorwissen erleichtert die Decodierung oder macht sie im Falle von Beschädigungen oder gestörter Bilderfassung überhaupt erst möglich, und zu weiteren Details wird auf die einleitend genannten Dokumente EP 3 428 835 A1 und EP 4 258 160 A1 verwiesen. Vorzugsweise wird von der Etikett-Schablone auch eine Position des Codes auf dem Etikett angegeben. Diese Positionsangabe ist bevorzugt relativ, beispielsweise ausgehend von einem Zentrum des Etiketts oder eines als Bezug ausgewählten Codes auf dem Etikett. Dazu können beispielsweise Strahlen von dem Bezugspunkt aus mit Winkel und Länge angegeben werden, wo sich entsprechend der Etikett-Schablone ein weiterer Code befindet. Schon aus Implementierungsgründen enthält eine Etikett-Schablone vorzugsweise eine Identifizierung, die auch sprechend gestaltet sein kann, um eine Zuordnung zu einem Hersteller oder einer für den Benutzer erkennbaren Etikett-Klasse zu ermöglichen. Eine Etikett-Schablone kann optional eines oder mehrere der oben genannten insgesamt sieben Merkmale zur Erkennung eines Etiketts enthalten, insbesondere welche Helligkeit des Untergrunds erwartet wird, welche Größe und Form des Etiketts und welche Orientierung der Codes.

Die Steuer- und Auswertungseinheit hat bevorzugt Zugriff auf mindestens eine Etikett-Schablone, die mindestens ein Logo aufweist. Als alternatives oder ergänzendes Merkmal einer Etikett-Schablone ist demnach ein Logo vorgesehen. Unter einem Logo wird ein grafisches Zeichen verstanden, das wiedererkennbar auf einen bestimmten Etiketten-Hersteller hinweist, insbesondere eine Bild-Text-Kombination. Solche Logos sind auf zahlreichen Etiketten aufgebracht, um auf den Hersteller des Etiketts beziehungsweise den Logistiker oder Versender hinzuweisen. Das Logo befindet sich dann in der Regel in einer festen geometrischen Beziehung zu dem Etikett und den darauf angebrachten Codes. Dadurch können interessierende Bereiche eines Etiketts anhand der Position des Logos auf dem durch die Etikett-Schablone bekannten Typ eines Etiketts verifiziert, plausibilisiert oder überhaupt erst aufgefunden werden.

Die Steuer- und Auswertungseinheit ist bevorzugt für ein automatisches Einlernen ausgebildet, bei dem eine Etikett-Schablone oder eine Eigenschaft einer Etikett-Schablone aus erfassten Bilddaten eingelernt wird. Dabei werden dem Codeleser vorzugsweise vor dem Betrieb gezielt Beispiele von Etiketten mit Codes gezeigt. Denkbar ist auch ein Lernen oder Weiterlernen im Betrieb, beispielsweise mit einer anfänglichen Etikett-Schablone, die nur die Anzahl und Art von Codes vorgibt und zu der im laufenden Betrieb anhand von zu der Etikett-Schablone passenden Etiketten die Positionen der Codes nachgelernt werden. Alternativ zu einem automatischen Einlernen ist eine Parametrierung von Hand oder eine Eingabe mit Unterstützung durch eine grafische Benutzerschnittstelle (GUI, Graphical User Interface) denkbar. Hybride mit automatischen Vorschlägen an einen Benutzer oder mit zunächst von Hand erstellten Etiketten-Schablonen, die dann automatisch verfeinert werden, sind denkbar.

Die Steuer- und Auswertungseinheit ist bevorzugt dafür ausgebildet, ein Etikett anhand einer Etikett-Schablone zu identifizieren, insbesondere mit Hilfe mindestens eines bereits decodierten optischen Codes eines interessierenden Bereichs des Etiketts oder eines Logos. Die Etikett-Schablonen ermöglichen es, ein Etikett eines bestimmten Typs in den Bilddaten zu identifizieren. Das kann für sich eine interessante Ausgabeinformation sein, welche Etiketten erfasst wurden beziehungsweise welches Leseergebnis zu welchem Etikett gehört. Bevorzugt wird dies dafür verwendet, dem Etikett anhand der Etikett-Schablone weitere Eigenschaften zuzuweisen beziehungsweise ein Decodierergebnis zu verifizieren. Mit einem jeweiligen gelesenen Code können Hypothesen aufgestellt oder verfeinert werden, zu welcher Etikett-Schablone ein in den Bilddaten erkanntes Etikett gehört. Die Identifizierung eines Etiketts anhand einer Etikett-Schablone gelingt besonders einfach und robust anhand des Codeinhalts eines der Codes auf dem Etikett oder anhand eines Logos.

Die Steuer- und Auswertungseinheit ist bevorzugt dafür ausgebildet, in einem zumindest teilweise identifizierten Etikett so lange interessierende Bereiche mit einem Decodierverfahren zu bearbeiten, bis alle optischen Codes des Etiketts decodiert sind. Zumindest teilweise bedeutet, dass es jedenfalls eine Hypothese gibt, zu welcher Etikett-Schablone oder welchen Etikett-Schablonen ein in den Bilddaten erkanntes Etikett passt. Dann lässt sich aus einer passenden Etikett-Schablone ableiten, welche weiteren Codes noch vorhanden sein müssten, vorzugsweise sogar mit einer Positionsangabe innerhalb des Etiketts. Weitere Leseversuche (Retries) können daher gezielt vorgenommen werden, um schließlich ein Etikett vollständig zu erfassen und zu identifizieren, d.h. mit allen seinen Codes. In diesem Zusammenhang gibt eine Etikett-Schablone eine doppelte Bedingung im Sinne von vollständig und hinreichend: Zum einen sind noch weitere interessierende Bereiche mit einem Decodierverfahren zu bearbeiten, wenn noch nicht alle Codes entsprechend der Vorgabe der Etikett-Schablone gelesen werden konnten. Zum anderen kann aber auch aufgehört werden, weitere interessierende Bereiche eines in den Bilddaten erkannten Etiketts mit einem Decodierverfahren zu bearbeiten, wenn die gelesenen Codes der Etikett-Schablone entsprechen. Es kann dann durchaus noch weitere interessierende Bereiche in dem Etikett geben, hierbei handelt es sich aber um nun erkanntermaßen falsch-positive interessierende Bereiche, und das wird mit Hilfe der Etikett-Schablone erkannt, so dass hierfür keine unnötige Decodierzeit aufgewandt werden muss.

Die Steuer- und Auswertungseinheit ist bevorzugt dafür ausgebildet, für den Fall, dass gemäß Etikett-Schablone mehrere optische Codes gleichen Codeinhalts in einem Etikett vorhanden sind, den Codeinhalt eines interessierenden Bereichs mit einem der mehreren optischen Codes gleichen Codeinhalts auf mindestens einen weiteren interessierenden Bereich zu übertragen. Bei einigen Etiketten ist vorgesehen, denselben Codeinhalt redundant in mehreren Codes des Etiketts aufzubringen. Über die Etikett-Schablone ist bekannt, ob ein solcher Fall vorliegt. Wenn dann ein solches Etikett in Bilddaten erkannt und bereits einer der redundanten Codes gelesen wurde, ist es überflüssig, die weiteren redundanten Codes auch noch zu lesen. Stattdessen wird nach dieser Ausführungsform das Leseergebnis ohne weiteren Aufwand an Decodierzeit auf alle redundanten Codes übertragen.

Die Steuer- und Auswertungseinheit ist bevorzugt dafür ausgebildet, die interessierenden Bereiche eines Etiketts mit Hilfe der Etikett-Schablone anzupassen. Dank einer Etikett-Schablone mit Positionen ist für ein damit identifiziertes Etikett bekannt, wo sich die Codes und damit speziell die noch nicht gelesenen Codes auf dem Etikett befinden müssen. Damit kann die Segmentierung nochmals verbessert werden, es können dediziert interessierende Bereiche an gerade den richtigen Stellen des Etiketts gebildet werden, um hier im nächsten Schritt nach Möglichkeit mit gezielten Wiederholungen (Retries) noch erfolgreich zu decodieren. Das ist in mehrerlei Hinsicht denkbar: Es können interessierende Bereiche hinzukommen, die bisher als falsch-negativ übersehen wurden, weil an der betreffenden Stelle genauer hingesehen beziehungsweise nun schon schwächere Strukturen akzeptiert werden, es können bereits segmentierte interessierende Bereiche als falsch-positiv aussortiert werden, weil sie sich an einer Stelle befinden, an der im Etikett gar kein Code vorgesehen ist, oder es kann ein bereits segmentierter interessierender Bereich in Position und Größe verbessert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: ein beispielhaftes Ablaufdiagramm zur Erkennung von Etiketten und zum auf Etiketten bezogenen Decodieren;
- Fig. 3a-e: Beispielbilder in verschiedenen Stadien der Erkennung von Etiketten, nämlich in Figur 3a das unbearbeitete Ausgangsbild, in Figur 3b eine Ausschnittvergrößerung von mit Codes verwechselbaren Störstrukturen, in Figur 3c die hervorgehobenen Strukturen heller als eine Schwelle, in Figur 3d die Anwendung eines Erosionsfilters und in Figur 3e eine Kennzeichnung der insgesamt in diesem Beispiel verbleibenden vier möglichen Etiketten;
- Fig. 4: ein beispielhaftes Ablaufdiagramm zur Identifizierung eines Etiketts mit einer Etikett-Schablone und zu dem darauf bezogenen Decodieren;
- Fig. 5: ein Beispielbild eines Einzelgänger-Codes, der nicht auf einem Etikett aufgebracht ist;
- Fig. 6: ein Beispielbild eines Etiketts mit mehreren Codes zur Illustration der Angabe von Positionen der Codes auf einem Etikett anhand von Strahlen mit Winkel und Länge;
- Fig. 7a: eine Illustration der auf Form und Positionen bezogenen Information einer Etikett-Schablone;
- Fig. 7b: eine Illustration der Prüfung, ob eine Etikett-Schablone hinsichtlich der in Figur 7a gezeigten auf Form und Position bezogenen Informationen zu einem aufgenommenen Etikett passt; und
- Fig. 8: ein Beispielbild eines Etiketts mit redundanten Codes.

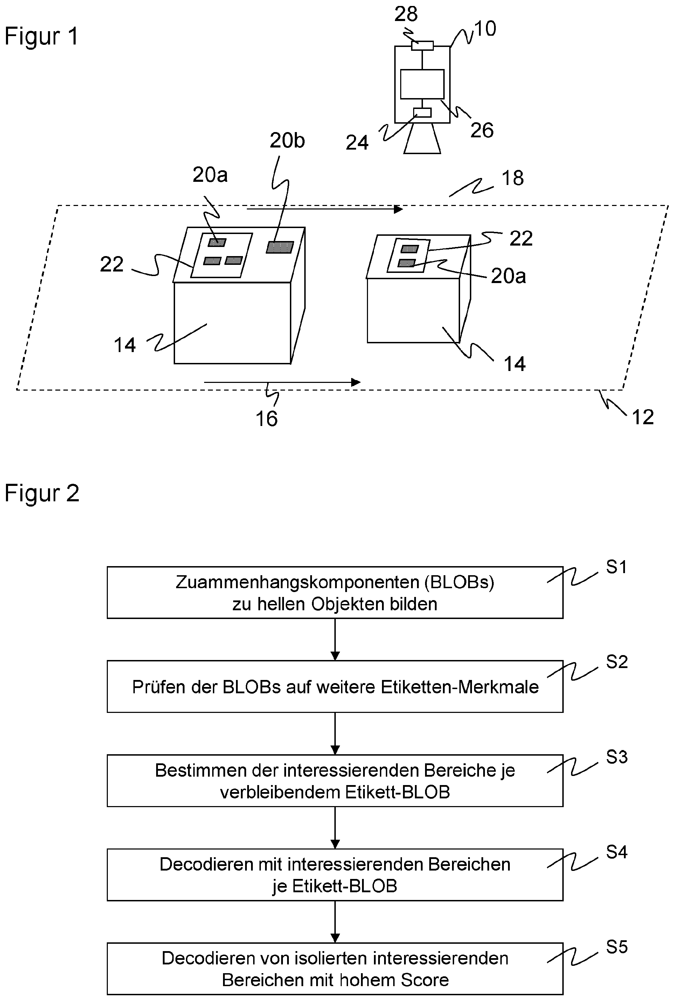

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codes 20a-b, die von dem Codeleser 10 erfasst und ausgewertet werden. Viele der Codes 20a befinden sich gruppenweise auf einem Label oder Etikett 22, wobei es ausnahmsweise als Einzelgänger bezeichnete Codes 20b außerhalb der Etiketten 22 geben kann. Die Codes 20a-b und Etiketten 22 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Lesen von Codes, so dass dieses Beispiel nicht einschränkend verstanden werden darf.

Der Codeleser 10 erfasst mit einem Bildsensor 24 Bilddaten der geförderten Objekte 14 samt Codes 20a-b und Etiketten 22, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigen Bildsensors oder eines Scanverfahrens, wobei im letztgenannten Fall als Bildsensor 24 ein einfacher Lichtempfänger wie eine Photodiode ausreicht. Die Steuer- und Auswertungseinheit 26 fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die mehreren Aufnahmen werden nacheinander und/oder von mehreren Codelesern 10 aufgenommen, die beispielsweise mit ihren Erfassungsbereichen 18 nur gemeinsam die gesamte Breite des Förderbands 12 abdecken, wobei jeder Codeleser 10 nur einen Teilabschnitt des Gesamtbildes aufnimmt und insbesondere die Teilabschnitte durch Bildverarbeitung (Stitching) zusammengefügt werden. Auch ein nur fragmenthaftes Decodieren innerhalb einzelner Teilabschnitte mit anschließendem Zusammenfügen der Codefragmente ist denkbar.

Über eine Schnittstelle 28 gibt der Codeleser 10 Informationen aus, wie gelesene Codes 20a-b, erkannte Etiketten 22 oder Arten von Etiketten sowie Bilddaten oder Ausschnitte davon. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst. Die Steuer- und Auswertungseinheit 26 kann mehrere Bausteine aufweisen, wie ein FPGA (Field Programmable Gat Array), einen Mikroprozessor (CPU) und dergleichen. Insbesondere für die noch zu beschreibende Segmentierung mit einem neuronalen Netz können spezialisierte Hardwarebausteine eingesetzt sein, etwa ein Kl-Prozessor, eine NPU (Neural Processing Unit), eine GPU (Graphics Processing Unit), eine VPU (Video Processing Unit) oder dergleichen.

Aufgabe des Codelesers 10 ist, die Codes 20a-b zu lesen. Als Vorverarbeitungsschritt der Bilddaten werden zunächst interessierende Bereiche ermittelt, in denen sich wahrscheinlich ein Code 20a-b befindet. Dies wird auch als Segmentierung oder Vorsegmentierung bezeichnet und ist an sich bekannt, beispielsweise als Kombinationsverfahren aus klassischer Bildverarbeitung und einem Verfahren des maschinellen Lernens gemäß der einleitend genannten EP 4 231 195 A1. Mit der Segmentierung kann zugleich eine Wertzahl (Score) ermittelt werden, wie wahrscheinlich es anhand der Segmentierungskriterien ist, dass sich ein Code 20a-b in dem interessierenden Bereich befindet. Die interessierenden Bereiche oder Codekandidaten werden dann von einem Decoder verarbeitet, der eines oder mehrere Decodierverfahren einsetzt, um den Codeinhalt auszulesen. Hierbei kann es falsch-positive interessierende Bereiche geben, in denen tatsächlich gar kein Code vorhanden ist. Dann wird ein Teil der verfügbaren Decodierzeit unnötig aufgewandt, und die Decodierzeit ist begrenzt, wie schon einleitend beschrieben, da die Anwendung ständig neue Bilddaten erzeugt und deshalb eine Auswertung zumindest annähernd in Echtzeit verlangt.

Erfindungsgemäß werden Segmentierung und Decodierung durch die Erkennung von Etiketten 22 und die Ableitung von bestimmten Eigenschaften oder Verarbeitungsschritten in Abhängigkeit davon unterstützt, ob sich ein Code 20a-b auf einem Etikett 22 befindet oder nicht, und vorzugsweise noch differenzierter je nach Art des Etiketts 22. Dies wird nun zunächst in Form einer kurzen Übersicht vorgestellt und anschließend unter Bezugnahme auf die Figuren 2 bis 8 genauer erläutert.

In einer vergleichsweise einfachen Ausführungsform werden Etiketten 22 anhand allgemeiner Bildmerkmale erkannt, wie dass es sich um helle Flächen handelt. Es werden dann nur interessierende Bereiche mit vermuteten Codes 20a auf Etiketten 22 decodiert, oder jedenfalls werden diese hinsichtlich der Decodierzeit bevorzugt. Ein Einzelgänger, also ein interessierender Bereich abseits von Etiketten 22, muss dann beispielsweise durch eine hohe Wertzahl schon sehr deutliche Hinweise auf einen Code 20b liefern, damit hier ausnahmsweise eine Decodierung versucht wird. Allgemein ist von der genannten Ausnahme abgesehen die Annahme, dass interessierende Bereiche abseits von Etiketten Störtexturen beziehungsweise falsch-positive interessierende Bereiche sind. Die Codes 20a werden durch die Etiketten 22 gruppiert, ein Etikett bildet eine Art visuelle Klammer. Dadurch kann auch eine gruppenweise Decodierreihenfolge vorgegeben werden, Etikett 22 für Etikett 22 statt wie herkömmlich in einer bezüglich Etiketten 22 effektiv zufälligen Reihenfolge. Spezifisches Vorwissen über bestimmte Etiketten 22 über die allgemeinen Bildmerkmalen zur Erkennung von Etiketten 22 hinaus nicht erforderlich.

In einer weiteren Ausführungsform werden Etikettentypen durch Vorwissen beschrieben, sogenannte Etiketten-Schablonen (Label Templates). Dadurch können Etiketten 22 klassifiziert und diese Information auch nach außen weitergegeben werden. Außerdem können aus dem Vorwissen über ein Etikett 22 Verbesserungen für die Decodierung, die Decodierreihenfolge und die interessierenden Bereiche abgeleitet und sehr gezielte Lesewiederholungen (Retries) durchgeführt werden, die eine höhere Erfolgswahrscheinlichkeit haben und somit die verfügbare Decodierzeit besser ausnutzen.

In nochmals einer weiteren Ausführungsform werden in die Etiketten-Schablonen zusätzlich Informationen über die erwarteten Positionen der Codes 20a eines Etiketts 22 aufgenommen. Dadurch können besonders aussichtsreiche interessierende Bereiche an Positionen ermittelt werden, wo sich ein Code 20a befinden müsste, aber noch nicht gelesen wurde, um interessierende Bereiche hinzuzugewinnen, auszusortieren, in ihrer Position und Form zu verbessern und um letztlich besonders aussichtsreiche Lesewiederholungen (Retries) vorzunehmen.

In einer Erweiterung dieser Ausführungsform werden noch unnötige Decodieraufrufe für redundante Codes 20a vermieden. Zahlreiche Arten von Etiketten 22 bringen dieselbe Codeinformation in mehreren redundanten Codes auf, und die entsprechende Information ist in der Etikett-Schablone hinterlegt. Damit ist es möglich, nur einen dieser redundanten Codes 20a zu lesen oder auf einen anderen der redundanten Codes 20a zu wechseln, wenn die Decodierung Schwierigkeiten macht. Das Leseergebnis kann unmittelbar, ohne eigene Decodierung, auf die anderen redundanten Codes übertragen werden.

Figur 2 zeigt ein beispielhaftes Ablaufdiagramm zur Erkennung von Etiketten 22 und zum auf Etiketten 22 bezogenen Decodieren. In dieser Ausführungsform stehen noch keine spezifischen Informationen für bestimmte Arten von Etiketten 22 zur Verfügung. Die einzelnen Schritte sind nur obligatorisch, wenn dies eigens so beschrieben ist.

In einem Schritt S1 werden helle, zumindest anteilig strukturlose Flächen erkannt. Dazu werden beispielsweise entsprechende Zusammenhangskomponenten (Connected Components) gebildet, insbesondere in Form von BLOBs (Binary Large Object). Die Etiketten 22 werden bis hierin allein an den beiden allgemeinen Merkmalen Helligkeit und Homogenität erkannt. Es ist darauf hinzuweisen, dass die gesuchten Etiketten 22 wegen der bestimmungsgemäß darauf befindlichen Codes 20a keinesfalls gänzlich strukturlos sind, sondern nur entsprechende Anteile aufweisen, was aber als Merkmal für die Erkennung eines Etiketts 22 ausreicht.

In einem Schritt S2 werden die Zusammenhangskomponenten, die als Kandidaten für Etiketten 22 aufgefasst werden können, mit weiteren Etiketten-Merkmalen geprüft, um noch möglichst viele Zusammenhangskomponenten auszuschließen, die keinem Etikett 22 entsprechen. Die beiden schon genannten Merkmale Helligkeit und homogene Anteile, oder gar nur eines dieser Merkmale, genügen manchmal, reichen jedoch oft allein nicht aus, um Etiketten 22 ausreichend trennscharf zu erkennen. Daher kommen vorzugsweise bis zu fünf weitere Merkmale hinzu: dunkle Strukturen oder deutliche Schwarzwerte, da ja entsprechend aufgedruckte Codes 20a vermutet werden, eine Form oder Kontur wie diejenige eines Rechtecks oder eine sonstige erwartete Form eines Etiketts 22 mit oder ohne einem erwarteten Seitenverhältnis (Aspect Ratio), Erwartungen an die Größe oder Flächengröße, weil Codes 20a hineinpassen sollen, erkennbare Codestrukturen mit typischen Texturmerkmalen, Hell-Dunkel-Übergängen oder Textursignaturen der erwarteten Codearten und Ausrichtung der Codestrukturen innerhalb des Etiketts 22, gemessen beispielsweise an der Kontur oder Form des entsprechend oben aufgeführten Merkmals, da die Ausrichtung typischerweise horizontal oder vertikal, jedoch nicht schräg ist. Informationen, inwieweit typische Texturmerkmale eines Codes 20a vorhanden sind und wie diese ausgerichtet sind, können bereits als Teilergebnis der Segmentierung abfallen. Die genannten insgesamt sieben Merkmale können in beliebigen Kombinationen nur teilweise verwendet werden, und es ist umgekehrt keine abschließende Aufzählung möglicher Merkmale, die geprüft werden können. Eine besonders bevorzugte Kombination von Merkmalen prüft zusätzlich zu Helligkeit und/oder homogenen Anteilen des Schritts S1 noch in Schritt S2 die Form und das Vorhandensein von für Codes typischen Texturmerkmalen.

Die Frage, ob eine Zusammenhangskomponente groß genug ist, damit Codes 20a hineinpassen, lässt sich aus minimalen Symbolgrößen und damit einer Angabe, wie viele Codemodule ein kleinster angenommener Code 20a enthält, und geschätzten Modulgrößen abschätzen. Die Modulgröße gibt die Größe der einzelnen Codemodule in Pixel an und wird beispielsweise aus bisherigen Segmentierungsergebnissen geschätzt. Kleinere Zusammenhangskomponenten können keine Etiketten 22 mit Codes 20a sein, so dass über dieses Merkmal kleine Hellflächen wie Reflexe auf Folien und dergleichen ausgeschlossen werden.

Sofern der Codeleser 10 in der Lage ist, Farbe zu erfassen, sind weitere Merkmale denkbar. Insbesondere gibt es helle Bereiche, die in Wirklichkeit nicht weiß oder hellgrau, sondern beispielsweise gelb sind und die sich deshalb meist nicht als Etikett 22 qualifizieren. Abweichend kann in einer speziellen Anwendung eine besondere Farbe der Etiketten 22 bekannt sein, dann sind farbige, homogene Bereiche sogar ein besonders starkes Indiz für ein Etikett 22.

In einem Schritt S3 wird angenommen, dass die verbleibendem Zusammenhangskomponenten Etiketten 22 entsprechen. Die interessierenden Bereiche mit potentiellen Codes 20a-b aus der vorangegangenen Segmentierung werden nun Etiketten 22 zugeordnet. Alternativ geht dem Schritt S1 keine Segmentierung für Codes 20a-b voraus, sondern nur ein grobes Auffinden heller Bereiche als Grundlage des Schritts S1, und die codebezogene Segmentierung erfolgt erst jetzt und nur innerhalb eines jeweiligen Etiketts 22. In beiden Fällen resultieren Gruppen von interessierenden Bereichen mit möglichen Codes 20a, wobei jede Gruppe einem erkannten Etikett 22 zugeordnet ist.

In einem Schritt S4 werden nun die interessierenden Bereiche Etikett für Etikett 22 von dem Decoder abgearbeitet. Diese gruppenweise oder auf ein Etikett 22 bezogene Reihenfolge weicht von der herkömmlichen Reihenfolge ab, die sich beispielsweise nur auf eine Wertzahl bezieht, mit der die Segmentierung die Wahrscheinlichkeit für einen Code 20a in dem jeweiligen interessierenden Bereich schätzt. Eine solche Wertzahl kann weiterhin die Reihenfolge der Decodierung innerhalb eines Etiketts 22 priorisieren. Ebenso ist möglich, dass die Reihenfolge der Bearbeitung der Etiketten 22 von solchen Wertzahlen abhängig gemacht wird und beispielsweise zuerst ein Etikett 22 abgearbeitet wird, in dem der interessierende Bereich mit höchster Wertzahl liegt, die höchste durchschnittliche Wertzahl erreicht wird oder dergleichen.

In einem Schritt S5 können optional ausnahmsweise doch noch interessierende Bereiche von dem Decoder verarbeitet werden, die zu keinem Etikett 22 gehören. Das setzt voraus, dass auch außerhalb von Etiketten 22 eine Segmentierung erfolgt ist und hierbei entsprechende Einzelgänger gefunden wurden, also interessierende Bereiche mit einem wahrscheinlichen Code 20b außerhalb von Etiketten 22. Um nicht den Effekt der auf Etiketten 22 bezogenen Decodierung zu unterminieren, müssen Einzelgänger besonders erfolgversprechend sein, also beispielsweise eine exzeptionell hohe Wertzahl aus der Segmentierung mitbringen. Der Schritt S5 muss sich nicht notwendig an den Schritt S4 anschließen. Ein Einzelgänger kann auch als erstes oder zwischendurch decodiert werden. Das ist insbesondere im Falle einer Zeilenkamera interessant, wo es leicht vorkommen kann, dass bereits ein Einzelgänger erfasst ist, aber noch kein vollständiges Etikett 22, so dass die Zeit genutzt werden kann, den Einzelgänger schon vorab zu decodieren.

Als Alternative oder Ergänzung zu dem beschriebenen Ablauf der Figur 2 mit rein klassischer Bildverarbeitung ist auch der Einsatz von Verfahren des maschinellen Lernens beziehungsweise eines neuronalen Netzes denkbar. Das bezieht sich vor allem auf die Schritte S1 und S2 zur Erkennung von Etiketten 22. Das Verfahren des maschinellen Lernens wird mit Bildern trainiert, in denen die Position von Etiketten 22 bekannt ist, so dass diese Bilder als Positiv- und zugleich in Bereichen ohne Etiketten 22 als Negativbeispiel samt passender Annotation für ein überwachtes Lernen fungieren können.

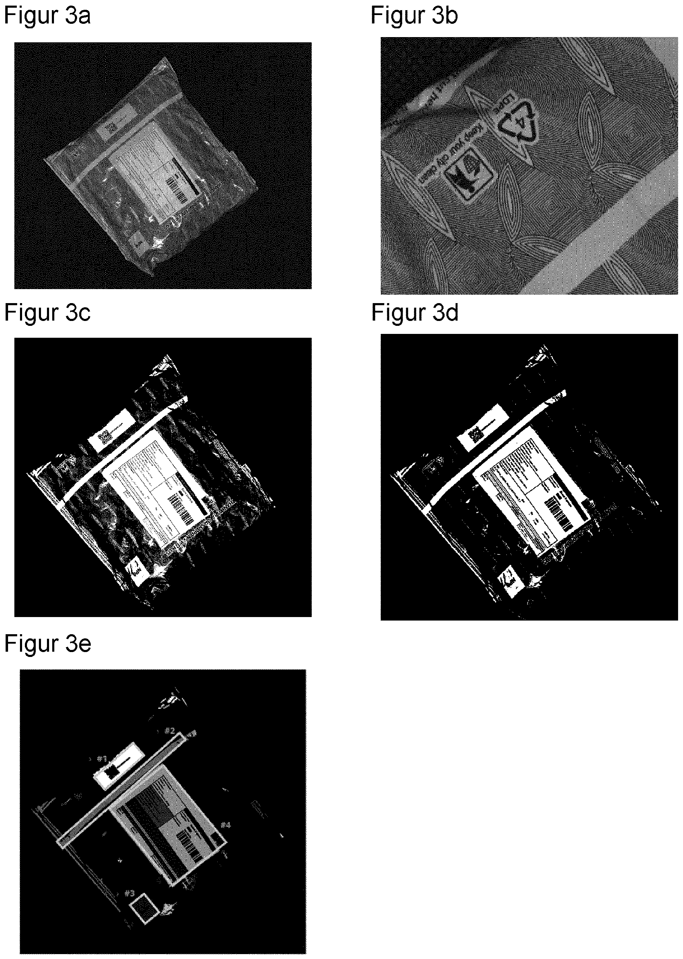

Figur 3a-e zeigen zur weiteren Illustration des soeben beschriebenen Vorgehens einige Beispielbilder in verschiedenen Stadien der Erkennung von Etiketten 22. Dabei zeigt zunächst die Figur 3a ein unbearbeitetes Ausgangsbild. Figur 3b illustriert in einer Ausschnittvergrößerung eine Textur, hier von einer Folie, die mit Codes 20a-b verwechselt werden kann und die demnach bei herkömmlicher Segmentierung und Decodierung viel unnötige Decodierzeit für falsch-positive interessierende Bereiche fordern würde. Da diese Texturen nicht auf einem Etikett 22 liegen und ihnen auch von der Segmentierung keine exzeptionell hohen Wertzahlen zugeordnet werden, ist die Erfindung in der Lage, solche interessierenden Bereiche von der Decodierung auszuschließen. In Figur 3c sind die Strukturen weiß hervorgehoben, die heller sind als eine Helligkeitsschwelle. In Figur 3d wurde dies noch mit einem Erosionsfilter mit einem 5x5 Pixel großen Filterkern bearbeitet. Ohne eigene Abbildung wurde dann noch eine Mindestgröße, eine annähernd rechteckige Form und das Vorhandensein von Texturen für Codestrukturen gefordert, und mit den verbleibenden hellen Strukturen wurden Zusammenhangskomponenten gebildet (Connected Components). Es verbleiben danach nur noch die vier in Figur 3e markierten Kandidaten für Etiketten 22. Drei davon sind auch mit dem bloßen Auge als Etiketten 22 zu erkennen. Der längliche helle Klebestreifen wird unter den diskutierten Kriterien zurecht noch als Etikett 22 angesehen, obwohl das objektiv nicht stimmt, und könnte anhand eines Seitenverhältnisses oder einer strengeren Vorgabe für codeähnliche Strukturen noch ausgefiltert werden.

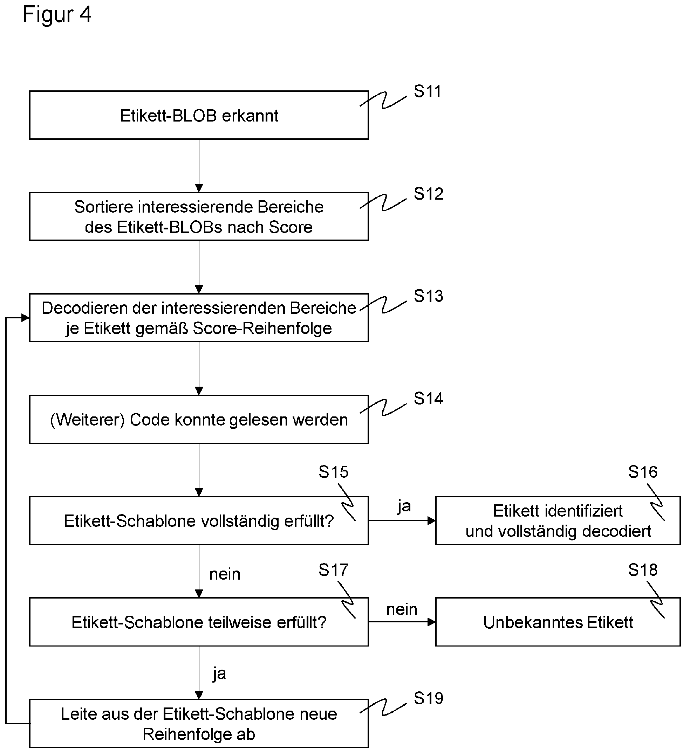

Figur 4 zeigt ein beispielhaftes Ablaufdiagramm zur Identifizierung eines Etiketts 22 mit einer Etikett-Schablone und zu dem darauf bezogenen Decodieren. Die einzelnen Schritte sind weiterhin nur obligatorisch, wenn dies eigens so beschrieben ist. In dieser Ausführungsform wird somit weitergehend nicht ausschließlich mit allgemeinen Bildmerkmalen gearbeitet, um Etiketten 22 als solche zu erkennen. Vielmehr wird über die Etikett-Schablonen Vorwissen über bestimmte erwartete Arten von Etiketten 22 mit eingebracht. Solches Vorwissen ermöglicht es, die verfügbare Decodierzeit nochmals optimierter einzusetzen. Denn wenn beispielsweise die gemäß Etikett-Schablone auf dem erkannten Etikett 22 befindlichen Codes 20a ausgelesen sind, können Lesebemühungen auf diesem Etikett 22 eingestellt werden, denn etwaige weitere interessierende Bereiche auf diesem Etikett 22 müssen falsch-positiv sein. Ferner können sehr gezielte, besonders aussichtsreiche Lesewiederholungen (Retries) vorgenommen werden. Schließlich kann als zusätzliche Ausgabeinformation verfügbar gemacht werden, welche Etiketten 22 erfasst wurden, beispielsweise durch konfigurierbare Namen oder Nummern der Etikett-Schablonen.

Eine Etikett-Schablone umfasst verschiedene Informationen, die ein Etikett 22 des betreffenden Typs beschreiben. Dazu zählt schon aus Implementierungsgründen vorzugsweise eine Bezeichnung, die vorzugsweise sprechend ist und beispielsweise auf den Hersteller des Etiketts 22 verweist. Vorzugsweise ist weiter angegeben, wie viele Codes 20a auf einem Etikett 22 des zugehörigen Typs zu decodieren sind und was deren Codeart ist. Optional können Symbolgrößen oder Codelängen je Codeart angegeben sein. Als Unterstützung für den Decoder kann Vorwissen für bestimmte Codes hinterlegt sein, hierfür wird auf die einleitend genannten Dokumente EP 3 428 835 A1 und EP 4 258 160 A1 verwiesen. Schließlich können noch Redundanzen angegeben werden, die in einer später vorgestellten Ausführungsform ausgenutzt werden. Nochmals optional können Etiketten-Eigenschaften entsprechend den zu Figur 2 vorgestellten Bildmerkmalen enthalten sein, dass also beispielsweise ein Etikett des zugehörigen Typs gelb und rechteckig mit einem Seitenverhältnis 3:2 ist. Die Aufzählung ist nicht abschließend. Insbesondere kommen später noch Codepositionen als weitere mögliche Eigenschaft in einer Etikett-Schablone hinzu. Beispiele für einfache Etikett-Schablonen sind demnach: Typ1 - 4xDMx redundant, 1xC128, oder Typ2 - 6xEAN129 redundant.

Etikett-Schablonen werden vom Anwender vorgeben, sei es durch Parametrierung, als Datenfeld oder eine grafische Benutzeroberfläche, die dem Anwender nach Möglichkeit halbautomatisch Vorschläge macht. Denkbar ist auch, Etikett-Schablonen aus jeweiligen Beispielen automatisch einzulernen, gegebenenfalls auf Basis eines Anwendervorschlags und/oder mit dessen Nachbesserungen.

In einem Schritt S11 des Ablaufs gemäß Figur 4 ist nun bereits ein Etikett 22 erkannt, insbesondere anhand des Vorgehens, das zu den Schritten S1 und S2 der Figur 2 schon erläutert wurde. Das Decodieren wird hier so lange verzögert, bis diese Erkennung vollzogen ist und auch die interessierenden Bereiche auf den Etiketten 22 durch die Segmentierung bekannt sind, mit einer möglichen Ausnahme von Einzelgängern, also Codes 20b außerhalb von Etiketten 22, die mit hoher Verlässlichkeit als Codes 20b erkannt sind und die womöglich schon zwischendurch decodiert werden.

In einem Schritt S12 werden die interessierenden Bereiche zu den Etiketten 22 gruppiert und nach ihren Wertzahlen sortiert. Dabei kann das Sortieren auch nach und nach erfolgen, also beispielsweise nur jeweils der interessierende Bereich mit höchster Wertzahl herausgefunden werden.

In einem Schritt S13 werden die interessierenden Bereiche eines Etiketts 22 gemäß ihrer Sortierung von dem Decoder verarbeitet. Die Decodierung erfolgt somit gruppenweise je Etikett 22, siehe hierzu auch die Beschreibung von Schritt S14 der Figur 2.

In einem Schritt S14 wird geprüft, ob ein erster beziehungsweise in späteren Iterationen ein weiterer Code 20a auf einem Etikett 22 gelesen werden konnte. Kann kein Code 20a gelesen werden, so ist auch kein Vergleich mit Etikett-Schablonen möglich, dann muss die verbleibende Decodierzeit mit den herkömmlichen Mitteln eingeteilt werden, bis doch ein Code 20a gelesen werden kann oder keine Decodierzeit mehr verfügbar ist.

In einem Schritt S15 wird geprüft, ob eine Etikett-Schablone identifiziert werden kann und demnach alle Codes 20a auf dem Etikett 22 gelesenen sind. Das ist dann ein vollständiger Erfolg (Good Read) für das Etikett 22. In einem Schritt S16 können Informationen über die Identität des Etiketts 22 und sämtliche Codeinhalte der darauf befindlichen Codes 20a ausgegeben werden. Sofern es noch ein weiteres Etikett 22 gibt, wird dort ohne explizite Darstellung eines entsprechenden Pfeils in dem Ablauf der Figur 4 die Decodierung fortgesetzt, andernfalls kann auf neue Bilddaten gewartet werden.

In einem Schritt S17 wird alternativ zu einer vollständigen Identifizierung und Abarbeitung eines Etiketts 22 geprüft, ob es immerhin Kandidaten unter den Etikett-Schablonen gibt, die mit den bisher gelesenen Codes 20a teilweise getroffen werden. Ist das nicht der Fall, so wird in einem Schritt S18 das Etikett 22 als unbekannt klassifiziert. Falls noch Decodierzeit verfügbar ist, kann versucht werden, die Decodierung mit weiteren interessierenden Bereichen fortzusetzen. An dem Ergebnis, dass das Etikett 22 unbekannt ist und zu keiner Etikett-Schablone passt, kann das aber nichts mehr ändern. Es können aber durchaus sämtliche Codes auch eines unbekannten Etiketts 22a erfolgreich decodiert werden.

Wenn andererseits mindestens eine Etikett-Schablone auf die bisherigen Leseergebnisse passt, dann wird die geeignetste oder eine zufällige dieser Etikett-Schablonen vorläufig zugewiesen, und in einem Schritt S18 werden daraus interessierende Bereiche auf dem Etikett 19 abgeleitet, die besonders hohe Aussicht auf einen Leseerfolg bei einer Lesewiederholung (Retry) versprechen. Damit wird dann in den Schritt S13 iteriert, um nach Möglichkeit noch mehr Codes 20a zu lesen. Wenn keine Decodierzeit mehr zur Verfügung steht, wird mit dem Schritt S18 und somit einem unbekanntem Etikett 22 und nur teilweise verarbeiteten interessierenden Bereichen dieses Etiketts 22 abgebrochen.

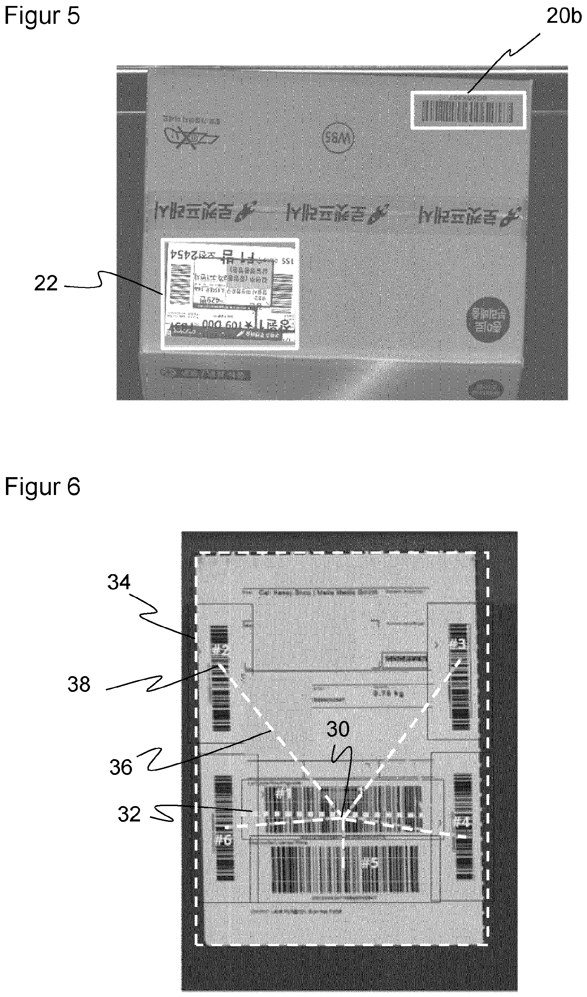

Figur 5 zeigt ein Beispielbild eines Einzelgängers, also eines Codes 20b, der direkt auf einem Paket und nicht auf einem Etikett 22 aufgebracht ist. Damit wird eine Ausnahme von der rein auf Etiketten 22 bezogenen Decodierung illustriert, die schon zu Schritt S5 der Figur 2 erläutert wurde und die auch in Figur 4 ergänzt werden kann. Es wird dann versucht, eine gewisse Anzahl von Einzelgängern und/oder Einzelgänger mit einer besonders hohen Wertzahl zu decodieren, vorzugsweise noch während der Bilderfassung und Erkennung von Etiketten 22, ansonsten unter Zuweisung eines gewissen Anteils der danach verfügbaren Decodierzeit.

Figur 6 zeigt ein Beispielbild eines Etiketts mit mehreren Codes zur Illustration der Angabe von Positionen der Codes auf einem Etikett anhand von Strahlen mit Winkel und Länge. Das ist eine besonders vorteilhafte Ausgestaltung für eine weitere Ausführungsform der Erfindung, in der Etikett-Schablonen Informationen über die interne Geometrie eines Etiketts enthalten. Besonders interessante geometrische Eigenschaften sind die Form des Etiketts und die Positionen der Codes auf dem Etikett.

Die geometrischen Eigenschaften müssen zunächst eingelernt werden. Das kann, wie schon zu den übrigen Informationen einer Etikett-Schablone beschrieben, von Hand parametriert werden, vorzugsweise unterstützt von einer Eingabemaske, einem Editor oder einer grafischen Benutzeroberfläche, in der beispielsweise Codepositionen auf einem Beispielbild von Hand markiert werden.

Vorzugsweise werden jedoch die Positionen automatisch erfasst. Passende Beispielbilder eines Etiketts zu einer Etikett-Schablone können gezielt beispielsweise während einer Inbetriebnahme präsentiert werden. Andererseits besteht die Möglichkeit, dass Etiketten-Schablonen anhand beliebiger, nicht eigens für das Einlernen ausgewählter Objekte mit Etiketten 22 vervollständigt oder aktualisiert werden, sei es vorab oder während des betriebs. Es gibt dafür bereits eine Etiketten-Schablone, die aber noch nicht vollständig befüllt ist. Wird dann eine Aufnahme der Etiketten-Schablone zugeordnet, wie etwa zu Figur 4 beschrieben, dann kann anhand der gelesenen Codes deren Position bestimmt und die entsprechende Information in der Etiketten-Schablone ergänzt oder modifiziert werden.

Die Positionen sollten vorzugsweise rotations- und skalierungsinvariant in der Etiketten-Schablone abgelegt sein, denn im Lesebetrieb werden Etiketten in beliebiger Orientierung und aus verschiedensten Abständen erfasst. Die Positionen aller Codes einer Etiketten-Schablone können vorteilhaft mit den gewünschten Invarianzen definiert werden, wenn ein beliebig ausgewählter Code der Etiketten-Schablone als Bezugscode gewählt wird. Das ist in Figur 6 illustriert. Bezugspunkt 30 ist der Schwerpunkt des Bezugscodes. Als Anker für die Orientierung kann die Scanrichtung 32 senkrecht zu den Balken des Bezugscodes dienen. Bei einem 2D-Code kann analog dessen beispielsweise horizontale Ausrichtung herangezogen werden. Alternativ könnte hier auch die äußere Form 34 des Etiketts 22 herangezogen werden, aber die Scanrichtung 32 ist stabiler und wird ohnehin im Zuge des Codelesens bekannt. Von diesem Bezugspunkt ausgehend werden nun Strahlen 36 durch die Schwerpunkte 38 der übrigen Codes des Etiketts gezogen, deren Orientierung beispielsweise über einen jeweiligen Winkel zu der Scanrichtung 32 beschrieben ist. Damit ist die Bedingung der Rotationsinvarianz erfüllt. Um auch skaleninvariant zu werden, kann der Abstand von dem Bezugspunkt 30 zu einem weiteren Code längs des zugehörigen Strahls 36 in Einheiten der Modulgrößen des Bezugscodes gemessen werden. Diese Modulgröße wird im Rahmen des Decodierens des Bezugscodes geschätzt und nach dessen erfolgreichem Codieren sogar genau bekannt.

Zum Einlernen der Positionen für eine Etikett-Schablone werden aus einem Beispielbild zunächst die Codes 20a eines Etiketts 22 gelesen. Einer der Codes 20a wird als Bezugscode ausgewählt und dessen Schwerpunkt als Bezugspunkt 30 festgelegt. Für die Strahlen 36 oder Verbindungslinien zu den Schwerpunkten der anderen Codes 20a wird der Winkel zur Scanrichtung 32 des Bezugscodes bestimmt. Die Abstände längs der Strahlen 36 werden zunächst in Pixeln gemessen und dann in Einheiten der Modulgröße des Bezugscodes umgerechnet, die aus dem Decodieren des Bezugscodes bekannt ist. Perspektivische Effekte etwa im Falle einer Seitenlesung können anhand der Form 34 des Etiketts 22 oder derjenigen der Codes 20a korrigiert werden.

In den Etikett-Schablonen werden dementsprechend je Code Positionsdaten gespeichert, beispielsweise ein Winkel und ein Abstand in Einheiten der Modulgröße eines Bezugscodes, sowie die Identität des Bezugscodes. Es können je Code mehrere solche Positionsdaten zu unterschiedlichen Bezugscodes gespeichert werden. Diese Redundanz ermöglicht im Betrieb eine Wahl, welcher gerade gelesene Code als Bezugscode herangezogen werden kann. Ferner ist denkbar, weitere geometrische Informationen zu erfassen und in der Etikett-Schablone zu speichern, wie etwa Abstände zu Rändern des Etiketts 22 oder Größen benachbarter Codes in Einheiten der eigenen Modulgröße.

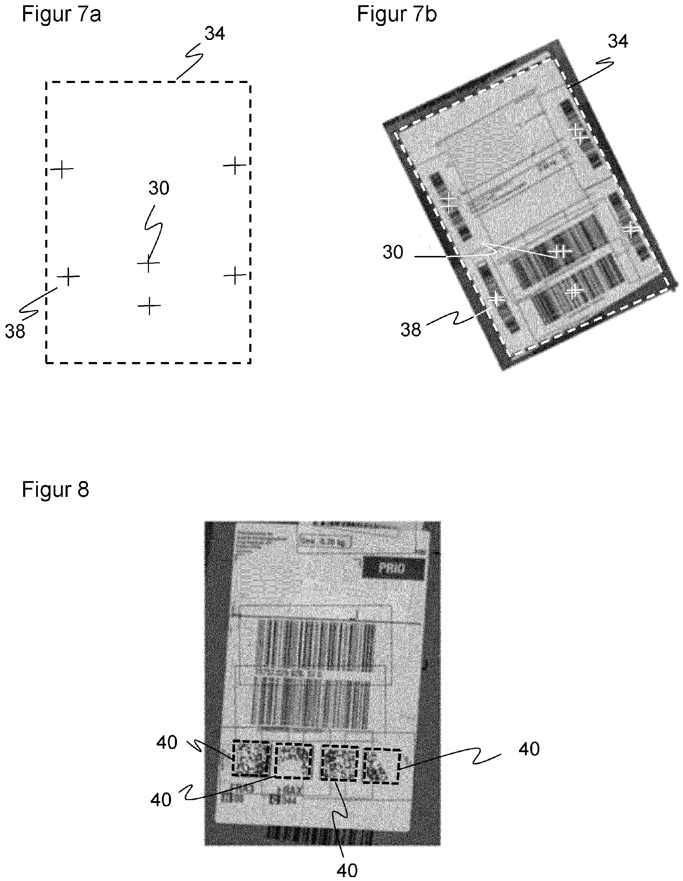

Figur 7a zeigt eine Illustration der auf Form und Positionen bezogenen Information einer Etikett-Schablone. Es ist derselbe Bezugscode ausgewählt wie in Figur 6. Die Positionen der weiteren Codes 20a sind nun einfach durch ein Kreuz gekennzeichnet, obwohl weiterhin vorzugsweise mit den beschriebenen rotations- und skalierungsinvarianten Positionsdaten gearbeitet wird.

Figur 7b zeigt eine Illustration der Prüfung, ob eine Etikett-Schablone hinsichtlich der in Figur 7a gezeigten auf Form und Position bezogenen Informationen zu einem aufgenommenen Etikett 22a passt. Um überhaupt eine Etikett-Schablone anwenden zu können, muss es mindestens eine Hypothese geben, welche Etikett-Schablone passen könnte, beispielsweise wie zu den Schritten S15 und S17 der Figur 4 erläutert. Die Positionsdaten der Etikett-Schablone und die Schwerpunkte 38 gelesener Codes 22a des Etiketts 22 können auf verschiedene Weisen genutzt werden. Es können Sollpositionen der Etikett-Schablone mit Ist-Postionen der gelesenen Codes 20a verglichen werden, um die Hypothese über die Passung der Etikett-Schablone zu dem Etikett 22 zu festigen. Bei feststehender Identität können die Ist-Positionen verwendet werden, um die Etikett-Schablone zu vervollständigen oder zu aktualisieren. Und es kann, ausgehend von einem erfolgreich gelesenen Bezugscode, vorhergesagt werden, an welchen weiteren Positionen sich noch Codes befinden sollten.

Letzteres kann dafür genutzt werden, gezielte Lesewiederholungen (Retries) speziell an den erwarteten Positionen von Codes durchzuführen. Es wird damit denjenigen interessierenden Bereichen weitere Decodierzeit zugewiesen, die keine falsch-positiven interessierenden Bereiche sind.

Weitergehend kann eine Nachsegmentierung erfolgen, um an den erwarteten Codepositionen bessere interessierende Bereiche zu erhalten, oder interessierende Bereiche überhaupt erst zu erzeugen, die in der früheren Segmentierung übersehen wurden. Aus der Etikett-Schablone und nach Lesen des Bezugscodes steht Vorwissen zur Verfügung, wo sich ein interessierender Bereich des noch fehlenden Codes befinden muss. Mit einem interessierenden Bereich, der mit Hilfe dieses Vorwissens bestimmt oder korrigiert wurde, können dann weitere Leseversuche unternommen werden. Hilfreich für die Nachsegmentierung ist, wenn die Etikett-Schablone Informationen über die Ausdehnung ihrer Codes enthält. Dies kann wie die Positionsinformationen skaleninvariant in Einheiten von Modulgrößen angegeben werden. Das bezieht sich vor allem auf die Höhenrichtung, da die Breitenrichtung in Abhängigkeit von dem Codeinhalt variiert.

Schließlich besteht die Möglichkeit, Etiketten 22 zu verifizieren, also Rückmeldungen über einen Fehldruck oder dergleichen zu geben. Oftmals werden Codes 20a zu nahe an dem Rand des Etiketts 22 aufgebracht. Wenn dadurch Codeelemente fehlen, die gar nicht mehr in den Bereich des Etiketts 22 gedruckt wurden, wird der Code 20a möglicherweise unlesbar. Derartige Positionsfehler werden anhand der Etikett-Schablone erkannt, um beispielsweise in künftigen Etiketten 22 entsprechende Druckfehler zu korrigieren.

Figur 8 zeigt ein Beispielbild eines Etiketts 22 mit vier redundant aufgebrachten DMx-Codes 40 zur Illustration einer möglichen Erweiterung der bisher erläuterten Ausführungsformen. Solche Redundanzen sind üblich, und die Etikett-Schablone kann entsprechende Informationen enthalten. Wird nun einer der redundanten Codes 40 erfolgreich gelesen, so können unnötige Decodieraufrufe für die weiteren redundanten Codes 40 eingespart werden. Der Codeinhalt ist mit dem ersten Lesen eines der redundanten Codes 40 bekannt und kann direkt auf die übrigen redundanten Codes 40 übertragen werden.

Neben der Ausgabe von Codeinhalten wird von dem Codeleser 10 oft erwartet, auch Bilddaten ausgangsseitig zur Verfügung zu stellen. Dabei fallen aber sehr viele Bilddaten an, besonders wenn die ursprüngliche hohe Auflösung beibehalten wird. Eine Auflösungsreduktion andererseits beeinträchtigt mögliche nachgelagerte Bildauswertungen. Die Erkennung von Etiketten 22 erlaubt nun, Bilder zur Datenreduktion in hoher Auflösung zu belassen und gerade auf den Bereich des Etiketts 22 zuzuschneiden (Cropping). Ergänzend kann ein Vollbild verringerter Auflösung ausgegeben werden.

Es ist denkbar, die beschriebene, auf Etiketten 22 bezogene Verarbeitung und Decodierung nicht ständig einzusetzen, sondern als einen Etiketten-Decodier-Modus zusätzlich zum herkömmlichen Vorgehen anzubieten. Es wird dann beispielsweise von Hand in den neuen Modus geschaltet, wenn bekannt ist, dass in der Anwendung zahlreiche Etiketten 22 folgen, oder auch automatisch, wenn es im Standardmodus zu viele falsch-positive interessierende Bereiche gibt.

Bei durchgehend hellen Objekten oder solchen, die vollflächig mit einem Etikett 22 versehen sind, sind viele Vorteile der Erfindung nicht verwirklicht, da es keine interessierenden Bereiche außerhalb von Etiketten 22 gibt. In manchen Fällen wird dennoch ein Etikett 22 erkannt und identifiziert, so dass beispielsweise Codepositionen weiterhin geprüft oder vorhergesagt werden. Gelingt es nicht, das Etikett 22 zu identifizieren, so wird das gesamte Objekt als unbekanntes Etikett 22 behandelt, was letztlich auf die gleiche Vorgehensweise zurückführt wie herkömmlich ohne Beachtung von Etiketten 22. Die Decodierung kann aber ebenso in solchen Situationen explizit in den Standardmodus zurückfallen.

Als Alternative oder Ergänzung kann zur Identifizierung eines Etiketts ein Logo auf dem Etikett herangezogen werden. Die Etikett-Schablone enthält in diesem Fall Informationen über das Logo, beispielsweise ein Beispielbild des Logos oder beschreibende Merkmale, mit denen das Logo wiedererkannt werden kann. Der Ablauf kann dann von Figur 4 abweichen, da ein Etikett anhand des Logos und nicht eines gelesenen Codes identifiziert wird. Ebenso denkbar ist, dass die Identifizierung über gelesene Codes und Logo einander ergänzen oder je nach Situation ablösen. Ist einmal ein Etikett mit seiner zumindest groben Geometrie innerhalb der Bilddaten aufgefunden, wie zu Figur 2 erläutert, so ergeben sich je potentiell in Frage kommender Etikett-Schablone bereits Hypothesen, wo innerhalb des Etikettes sich das jeweilige Logo befinden müsste. Ein Vergleich zwischen dem erwarteten Logo und den Bildinformationen im Bereich des Etiketts kann daher sehr gezielt und nur für wenige, kleine Bildausschnitte vorgenommen werden.

Ist einmal ein Logo erkannt und damit ein Etikett über seine Etikett-Schablone identifiziert, so kann aus der Position des Logos anhand der Etikett-Schablone vorausgesagt werden, wo sich interessierende Bereiche der Codes auf dem Etikett befinden. Das Logo ersetzt oder ergänzt damit die gelesenen Codes, die in Figur 4 als Anker oder Bezugscodes verwendet werden. Zum rotations- und skaleninvarianten Auffinden der interessierenden Bereiche ausgehend von dem Logo als Anker können die oben beschriebenen Mechanismen analog verwendet werden. Das Logo kann damit in vielen Situationen das Auffinden und Lesen von Codes vereinfachen und verbessern. Weiterhin ist auch denkbar, dass ein Etikett anhand seines Logos selbst in der ungünstigen Situation zumindest identifiziert ist, in der kein einziger Code darauf lesbar ist. Das erleichtert die Fehlersuche und erforderlichenfalls ein manuelles Nachdecodieren.

## Patentansprüche

1. Optoelektronischer Codeleser (10) zum Lesen von optischen Codes (20a-b), der mindestens ein Lichtempfangselement (24) zur Erzeugung von Bilddaten aus Empfangslicht und eine Steuer- und Auswertungseinheit (26) aufweist, die dafür ausgebildet ist, die Bilddaten zu segmentieren, um interessierende Bereiche mit vermuteten optischen Codes (20a-b) aufzufinden und die interessierenden Bereiche mit einem Decodierverfahren zu bearbeiten, um den Codeinhalt eines optischen Codes (20a-b) in dem interessierenden Bereich zu lesen, **dadurch gekennzeichnet,**
**dass** die Steuer- und Auswertungseinheit (26) weiterhin dafür ausgebildet ist, in den Bilddaten ein Etikett (22) zu erkennen, die interessierenden Bereiche einem Etikett (22) zuzuordnen, somit zwischen interessierenden Bereichen zu unterschieden, die Teil eines Etiketts (22) sind und solchen, die es nicht sind, und einen interessierenden Bereich anders mit dem Decodierverfahren zu bearbeiten, wenn der interessierende Bereich Teil eines Etiketts (22) ist, als wenn der interessierende Bereich nicht Teil eines Etiketts (22) ist.

2. Codeleser (10) nach Anspruch 1,
wobei die Steuer- und Auswertungseinheit (26) dafür ausgebildet ist, die interessierenden Bereiche nach Etiketten (22) zu gruppieren.

3. Codeleser (10) nach Anspruch 1 oder 2,
wobei die Steuer- und Auswertungseinheit (26) dafür ausgebildet ist, zu den interessierenden Bereichen eine Wertzahl zu bestimmen, wie verlässlich in dem interessierenden Bereich ein optischer Code (20a-b) erfasst ist, und die Wertzahl in der Reihenfolge der Bearbeitung der interessierenden Bereiche mit einem Decodierverfahren zu berücksichtigen.

4. Codeleser (10) nach Anspruch 3,
wobei die Steuer- und Auswertungseinheit (26) dafür ausgebildet ist, interessierenden Bereichen, die Teil eines Etiketts (22) sind, eine höhere Wertzahl zuzuweisen.

5. Codeleser (10) nach einem der vorhergehenden Ansprüche,
wobei die Steuer- und Auswertungseinheit (26) dafür ausgebildet ist, interessierende Bereiche eines Etiketts (22) direkt nacheinander mit einem Decodierverfahren zu bearbeiten, so dass interessierende Bereiche eines Etiketts (22) als Gruppe abgearbeitet werden.

6. Codeleser (10) nach einem der vorhergehenden Ansprüche,
wobei die Steuer- und Auswertungseinheit (26) dafür ausgebildet ist, ein Etikett (22) anhand seiner Helligkeit und homogenen Textur zu erkennen.

7. Codeleser (10) nach einem der vorhergehenden Ansprüche,
wobei die Steuer- und Auswertungseinheit (26) dafür ausgebildet ist, ein Etikett (22) mit Hilfe von mindestens einem der folgenden Kriterien zu erkennen: dunkle Strukturen, Form, Größe, enthaltene Codestrukturen, Ausrichtung der Codestrukturen innerhalb des Etiketts (22).

8. Codeleser (10) nach einem der vorhergehenden Ansprüche,
wobei die Steuer- und Auswertungseinheit (26) Zugriff auf mindestens eine Etikett-Schablone hat, die einen bekannten Etiketten-Typ kennzeichnet, wobei eine Etikett-Schablone eine Anzahl von auf diesem Etiketten-Typ vorhandenen optischen Codes (20a) aufweist, insbesondere einschließlich jeweiliger Codeart und/oder Position der optischen Codes (20a) innerhalb eines Etiketts (22).

9. Codeleser (10) nach Anspruch 8,
wobei die Steuer- und Auswertungseinheit (26) Zugriff auf mindestens eine Etikett-Schablone hat, die mindestens ein Logo aufweist.

10. Codeleser (10) nach Anspruch 8 oder 9,
wobei die Steuer- und Auswertungseinheit (26) für ein automatisches Einlernen ausgebildet ist, bei dem eine Etikett-Schablone oder eine Eigenschaft einer Etikett-Schablone aus erfassten Bilddaten eingelernt wird.

11. Codeleser (10) nach einem der Ansprüche 8 bis 10,
wobei die Steuer- und Auswertungseinheit (26) dafür ausgebildet ist, ein Etikett (22) anhand einer Etikett-Schablone zu identifizieren, insbesondere mit Hilfe mindestens eines bereits decodierten optischen Codes (20a) eines interessierenden Bereichs des Etiketts (22) oder eines Logos.

12. Codeleser (10) nach Anspruch 11,
wobei die Steuer- und Auswertungseinheit (26) dafür ausgebildet ist, in einem zumindest teilweise identifizierten Etikett (22) so lange interessierende Bereiche mit einem Decodierverfahren zu bearbeiten, bis alle optischen Codes (20a) des Etiketts (22) decodiert sind.

13. Codeleser (10) nach einem der Ansprüche 8 bis 12,
wobei die Steuer- und Auswertungseinheit (26) dafür ausgebildet ist, für den Fall, dass gemäß Etikett-Schablone mehrere optische Codes (20a, 40) gleichen Codeinhalts in einem Etikett (20) vorhanden sind, den Codeinhalt eines interessierenden Bereichs mit einem der mehreren optischen Codes (20a, 40) gleichen Codeinhalts auf mindestens einen weiteren interessierenden Bereich zu übertragen.

14. Codeleser (10) nach einem der Ansprüche 8 bis 13,
wobei die Steuer- und Auswertungseinheit (26) dafür ausgebildet ist, die interessierenden Bereiche eines Etiketts (22) mit Hilfe der Etikett-Schablone anzupassen.

15. Verfahren zum Lesen von optischen Codes (20a-b), bei dem Bilddaten aus Empfangslicht erzeugt werden, die Bilddaten segmentiert werden, um interessierende Bereiche mit vermuteten optischen Codes (20a-b) aufzufinden und die interessierenden Bereiche mit einem Decodierverfahren bearbeitet werden, um den Codeinhalt eines optischen Codes (20a-b) in dem interessierenden Bereich zu lesen,
**dadurch gekennzeichnet,**
**dass** in den Bilddaten ein Etikett (22) erkannt wird, dass die interessierenden Bereiche einem Etikett (22) zugeordnet werden, somit zwischen interessierenden Bereichen unterschieden wird, die Teil eines Etiketts (22) sind und solchen, die es nicht sind, und dass ein interessierender Bereich anders mit dem Decodierverfahren bearbeitet wird, wenn der interessierende Bereich Teil eines Etiketts (22) ist, als wenn der interessierende Bereich nicht Teil eines Etiketts (22) ist.

## Claims

1. An optoelectronic code reader (10) for reading optical codes (20a-b) that has at least one light reception element (24) for generating image data from received light and a control and evaluation unit (26) that is configured to segment the image data to locate regions of interest having assumed optical codes (20a-b) and to process the regions of interest by a decoding process to read the code content of an optical code (20a-b) in the region of interest,
**characterized in that**
the control and evaluation unit (26) is further configured to recognize a label (22) in the image data, to assign a label (22) to the regions of interest, and thus to distinguish between regions of interest that are part of a label (22) and those that are not, and to process a region of interest differently by the decoding process when the region of interest is part of a label (22) than when the region of interest is not part of a label (22).

2. A code reader (10) in accordance with claim 1,
wherein the control and evaluation unit (26) is configured to group the regions of interest by labels (22).

3. A code reader (10) in accordance with claim 1 or claim 2,
wherein the control and evaluation unit (26) is configured to determine a score for the regions of interest on how reliable an optical code (20a-b) has been detected in the region of interest, and to take account of the score in the order of the processing of the regions of interest by a decoding process.

4. A code reader (10) in accordance with claim 3,
wherein the control and evaluation unit (26) is configured to assign a higher score to regions of interest that are part of a label (22).

5. A code reader (10) in accordance with any one of the preceding claims, wherein the control and evaluation unit (26) is configured to process regions of interest of a label (22) directly after one another by a decoding process so that regions of interest of a label (22) are worked through as a group.

6. A code reader (10) in accordance with any one of the preceding claims, wherein the control and evaluation unit (26) is configured to recognize a label (22) using its brightness and homogeneous texture.

7. A code reader (10) in accordance with any one of the preceding claims, wherein the control and evaluation unit (26) is configured to recognize a label (22) with the aid of at least one of the following criteria: dark structures, shape, size, code structures contained, orientation of the code structures within the label (22).

8. A code reader (10) in accordance with any one of the preceding claims, wherein the control and evaluation unit (26) has access to at least one label template that characterizes a known label type, with a label template having a plurality of optical codes (20a) present on this label type, in particular including the respective code type and/or position of the optical code (20a) within a label (22).

9. A code reader (10) in accordance with claim 8,
wherein the control and evaluation unit (26) has access to at least one label template that has at least one logo.

10. A code reader (10) in accordance with claim 8 or claim 9,
wherein the control and evaluation unit (26) is configured for an automatic teaching in which a label template or a property of a label template is taught from detected image data.

11. A code reader (10) in accordance with any one of the claims 8 to 10, wherein the control and evaluation unit (26) is configured to identify a label (22) with reference to a label template, in particular with the aid of at least one already decoded optical code (20a) of a region of interest of the label (22) or of a logo.

12. A code reader (10) in accordance with claim 11,
wherein the control and evaluation unit (26) is configured to process regions of interest in an at least partially identified label (22) for so long by a decoding process until all the optical codes (20a) of the label (22) have been decoded.

13. A code reader (10) in accordance with any one of the claims 8 to 12, wherein the control and evaluation unit (26) is configured to transfer the code content of a region of interest having one of the plurality of optical codes (20a, 40) of the same code content to at least one further region of interest in the case that a plurality of optical codes (20a, 40) of the same code content (20) are present in a label (20) in accordance with the label template.

14. A code reader (10) in accordance with any one of the claims 8 to 13, wherein the control and evaluation unit (26) is configured to adapt the regions of interest of a label (22) with the aid of a label template.

15. A method of reading optical codes (20a-b) in which image data from received light are generated, the image data are segmented to locate regions of interest having assumed optical codes (20a-b), and the regions of interest are processed by a decoding process to read the code content of an optical code (20a-b) in the region of interest, **characterized in that**
a label (22) is recognized in the image data, **in that** the regions of interest is assigned a label (22), and a distinction is thus made between regions of interest that are part of a label (22) and those that are not, and **in that** a region of interest is processed differently by the decoding process when the region of interest is part of a label (22) than when the region of interest is not part of a label (22).

## Revendications

1. Lecteur de codes optoélectronique (10) destiné à lire des codes optiques (20a-b), comprenant au moins un élément de réception de lumière (24) destiné à générer des données d'image à partir de la lumière reçue, et une unité de commande et d'évaluation (26) conçue pour segmenter les données d'image afin de trouver les zones d'intérêt contenant des codes optiques (20a-b) supposés et pour traiter les zones d'intérêt par un procédé de décodage afin de lire le contenu d'un code optique (20a-b) dans la zone d'intérêt,
**caractérisé en ce que**
l'unité de commande et d'évaluation (26) est en outre conçue pour reconnaître une étiquette (22) dans les données d'image, pour associer les zones d'intérêt à une étiquette (22), et pour ainsi distinguer entre des zones d'intérêt qui font partie d'une étiquette (22) et celles qui n'en font pas partie, et pour traiter par le procédé de décodage une zone d'intérêt, faisant partie d'une étiquette (22), différemment qu'une zone d'intérêt, ne faisant pas partie d'une étiquette (22).

2. Lecteur de codes (10) selon la revendication 1,
dans lequel l'unité de commande et d'évaluation (26) est conçue pour regrouper les zones d'intérêt selon les étiquettes (22).

3. Lecteur de codes (10) selon la revendication 1 ou 2,
dans lequel l'unité de commande et d'évaluation (26) est conçue pour déterminer une valeur numérique, relative aux zones d'intérêt, en fonction de la fiabilité de la détection d'un code optique (20a-b) dans la zone d'intérêt, et pour prendre en compte la valeur numérique dans l'ordre chronologique de traitement des zones d'intérêt par un procédé de décodage.

4. Lecteur de codes (10) selon la revendication 3,
dans lequel l'unité de commande et d'évaluation (26) est conçue pour attribuer une valeur numérique plus élevée aux zones d'intérêt faisant partie d'une étiquette (22).

5. Lecteur de codes (10) selon l'une des revendications précédentes, dans lequel l'unité de commande et d'évaluation (26) est conçue pour traiter par un procédé de décodage les zones d'intérêt d'une étiquette (22) directement les unes après les autres, de sorte que les zones d'intérêt d'une étiquette (22) sont traitées en groupe.

6. Lecteur de codes (10) selon l'une des revendications précédentes, dans lequel l'unité de commande et d'évaluation (26) est conçue pour reconnaître une étiquette (22) en se basant sur sa luminosité et sa texture homogène.

7. Lecteur de codes (10) selon l'une des revendications précédentes, dans lequel l'unité de commande et d'évaluation (26) est conçue pour reconnaître une étiquette (22) à l'aide de l'un au moins des critères suivants : structures sombres, forme, taille, structures de code contenues, orientation des structures de code à l'intérieur de l'étiquette (22).

8. Lecteur de codes (10) selon l'une des revendications précédentes, dans lequel l'unité de commande et d'évaluation (26) a accès à au moins un modèle d'étiquette caractérisant un type d'étiquette connu,
un modèle d'étiquette présente un certain nombre de codes optiques (20a) présents sur ce type d'étiquette, y compris en particulier le type de code respectif et/ou la position respective des codes optiques (20a) à l'intérieur d'une étiquette (22).

9. Lecteur de codes (10) selon la revendication 8,
dans lequel l'unité de commande et d'évaluation (26) a accès à au moins un modèle d'étiquette qui présente au moins un logo.

10. Lecteur de codes (10) selon la revendication 8 ou 9,
dans lequel l'unité de commande et d'évaluation (26) est conçue pour l'apprentissage automatique dans lequel un modèle d'étiquette ou une propriété d'un modèle d'étiquette est appris à partir de données d'image acquises.

11. Lecteur de codes (10) selon l'une des revendications 8 à 10,
dans lequel l'unité de commande et d'évaluation (26) est conçue pour identifier une étiquette (22) en se basant sur un modèle d'étiquette, en particulier à l'aide d'au moins un code optique (20a) déjà décodé d'une zone d'intérêt de l'étiquette (22) ou d'un logo.

12. Lecteur de codes (10) selon la revendication 11,
dans lequel l'unité de commande et d'évaluation (26) est conçue pour traiter par un procédé de décodage les zones d'intérêt dans une étiquette (22) au moins partiellement identifiée jusqu'à ce que tous les codes optiques (20a) de l'étiquette (22) aient été décodés.

13. Lecteur de codes (10) selon l'une des revendications 8 à 12,
dans lequel l'unité de commande et d'évaluation (26) est conçue pour, si, selon le modèle d'étiquette, plusieurs codes optiques (20a, 40) de même contenu sont présents dans une étiquette (20), transférer le contenu de code d'une zone d'intérêt, ayant l'un desdits plusieurs codes optiques (20a, 40) de même contenu de code, vers au moins une autre zone d'intérêt.

14. Lecteur de codes (10) selon l'une des revendications 8 à 13,
dans lequel l'unité de commande et d'évaluation (26) est conçue pour adapter les zones d'intérêt d'une étiquette (22) à l'aide du modèle d'étiquette.

15. Procédé de lecture de codes optiques (20a-b), dans lequel des données d'image sont générées à partir de la lumière reçue, les données d'image sont segmentées afin de trouver les zones d'intérêt contenant des codes optiques (20a-b) supposés, et les zones d'intérêt sont traitées par un procédé de décodage afin de lire le contenu d'un code optique (20a-b) dans la zone d'intérêt,
**caractérisé en ce que**
une étiquette (22) est reconnue dans les données d'image,
**en ce que** les zones d'intérêt sont associées à une étiquette (22), permettant de distinguer entre des zones d'intérêt qui font partie d'une étiquette (22) et celles qui n'en font pas partie, et
**en ce qu'**une zone d'intérêt, faisant partie d'une étiquette (22), est traitée par le procédé de décodage différemment qu'une zone d'intérêt, ne faisant pas partie d'une étiquette (22).
